# Europäisches Patentamt
## European Patent Office
## Office européen des brevets

(19)

(11) Veröffentlichungsnummer: **0 231 824**
**B1**

(12)

# EUROPÄISCHE PATENTSCHRIFT

(45) Veröffentlichungstag der Patentschrift: **05.09.90**

(51) Int. Cl.⁵: **F 02 B 37/12**, F 02 B 37/02

(21) Anmeldenummer: **87100860.3**

(22) Anmeldetag: **22.01.87**

(54) **Mehrzylinder-Brennkraftmaschine mit Abgasturbolader.**

(30) Priorität: **29.01.86 DE 3602615**

(43) Veröffentlichungstag der Anmeldung:
**12.08.87 Patentblatt 87/33**

(45) Bekanntmachung des Hinweises auf die
Patenterteilung:
**05.09.90 Patentblatt 90/36**

(84) Benannte Vertragsstaaten:
**DE FR GB IT SE**

(56) Entgegenhaltungen:
CH-A- 232 984
DE-A-2 326 989
DE-A-3 119 922
GB-A-1 079 066

(73) Patentinhaber: **AUDI AG**
**Auto-Union-Strasse 1 Postfach 220**
**D-8070 Ingolstadt (DE)**

(72) Erfinder: **Limbers, Heinrich**
**Krähenweg 4**
**D-7101 Oedheim (DE)**

(74) Vertreter: **Speidel, Eberhardt**
**Postfach 1320 Waldpromenade 26**
**D-8035 Gauting (DE)**

Courier Press, Leamington Spa, England.

## Beschreibung

Die Erfindung bezieht sich auf eine Mehryzlinder-Brennkraftmaschine gemäß dem Oberbegriff des Patentanspruchs.

Bei bekannten Brennkraftmaschinen mit Abgasturbolader (siehe beispielsweise die DE—A—33 03 350) zweigt die Bypaßleitung von dem Abgassammelrohr ab, welches die einzelnen Abgasleitungen bzw. den die Abgasleitungen zusammenfassenden Abgaskrümmer mit der Abgasturbine verbindet. Um im oberen Drehzahlbereich bei Vollast möglichst geringe Strömungswiderstände im Auspuffsystem zu erreichen, werden die Abgasleitungen und das Abgassammelrohr mit einem entsprechend großen Querschnitt ausgeführt. Diese großen Leitungsquerschnitte verringern jedoch die Strömungsgeschwindigkeit im unteren Drehzahlbereich, wodurch das Ansprechverhalten der Abgasturbine verschlechtert wird.

Aus der DE—A—33 12 093 ist es bekannt, bei Erreichen eines bestimmten Ladedrucks einzelne Abgasleitungen unter Umgehung der Abgasturbine direkt mit dem Abgasauslaß hinter der Turbine zu verbinden, während die anderen Abgasleitungen ständig mit der Abgasturbine verbunden sind. Dadurch soll der Abgasgegendruck verringert werden. Es findet jedoch keine Verbesserung des Ansprechverhaltens der Abgasturbine im unteren Drehzahlbereich statt, da die Querschnitte der Abgasleitungen und der Abgassammelrohre auf die Verhältnisse bei Vollast ausgelegt werden müssen. Überdies ergeben sich bei Vollast, wenn einzelne Abgasleitungen direkt mit dem Abgasauslaß in Verbindung stehen, unterschiedliche Abgasgegendrücke für die einzelnen Zylinder, was zu unterschiedlichen Restgasanteilen in den Zylindern führt und das Betriebsverhalten der Brennkraftmaschine verschlechtert.

Aus der DE—A—23 26 989 ist eine gattungsgemäße Brennkraftmaschine mit Abgasturbolader bekannt, bei der die Abgasleitungen in einen Katalysator münden, der durch ein einziges Rohr mit entsprechend großem Querschnitt mit der Abgasturbine verbunden ist. Durch die Zweigleitung, welche die Abgasleitungen im Bereich ihrer Anschlüsse an die Auslaßkanäle mit der Bypassleitung stromauf des Abblaseventils verbindet, werden der Katalysator und die Turbine vor zu hohen Drücken oder zu hohen Temperaturen bewahrt. Das Ansprechverhalten der Abgasturbine bei niedrigen Drehzahlen wird hierdurch nicht verbessert, da die Abgase aus den einzelnen Abgasleitungen im Katalysator gesammelt und gemeinsam der Turbine zugeführt werden. Bei niedrigen Drehzahlen und entsprechend geringem Abgasmassenstrom haben demzufolge die Abgase beim Eintritt in die Turbine eine relativ geringe Geschwindigkeit.

Der Erfindung liegt die Aufgabe zugrunde, bei einer Brennkraftmaschine der gattungsgemäßen Art einerseits ein druckverlustarmes Durchströmen des Auspuffsystems im oberen Drehzahlbereich und andererseits eine hohe Eintrittsgeschwindigkeit der Abgase in die Abgasturbine im unteren Drehzahlbereich zu erreichen.

Diese Aufgabe wird erfindungsgemäß durch die im Kennzeichen des Patentanspruchs angegebenen Merkmale gelöst.

Die Erfindung macht sich den Umstand zu Nutze, daß das Abblaseventil normalerweise erst im oberen Drehzahlbereich öffnet, um zu verhindern, daß der Ladedruck einen bestimmten Wert übersteigt. Solange das Abblaseventil geschlossen ist, und dies ist im unteren Drehzahlbereich stets der Fall, strömt das Abgas vollständig zur Turbine, und zwar aufgrund des entsprechend relativ geringen Querschnitts der Abgasleitungen mit einer hohen Strömungsgeschwindigkeit, so daß die Turbine sehr schnell anspricht. Im oberen Drehzahlbereich öffnet das Abblaseventil und es kann nun ein Teil der Abgase durch die Bypaßleitung abströmen, so daß trotz des verhältnismäßig geringen Querschnittes der Abgasleitungen der Gesamtströmungswiderstand und damit der Druckverlust gering gehalten wird.

Dadurch, daß die Abgasströme aller Zylinder in allen Betriebszuständen den gleichen Bedingungen unterworfen sind, sind alle Zylinder dem gleichen Abgasgegendruck ausgesetzt, so daß die Arbeitsbedingungen für alle Zylinder gleich sind und optimale Verbrauchs- und Abgaswerte erreicht werden können.

Die Erfindung wird im folgenden unter Bezugnahme auf die Zeichnungen beispielshalber erläutert.

Fig. 1 zeigt in schematischer Darstellung eine Mehrzylinder-Brennkraftmaschine mit Abgasturbolader entsprechend dem Stand der Technik, und

Fig. 2 zeigt in schematischer Darstellung eine Mehrzylinder-Brennkraftmaschine mit Abgasturbolader entsprechend einem Ausführungsbeispiel der Erfindung.

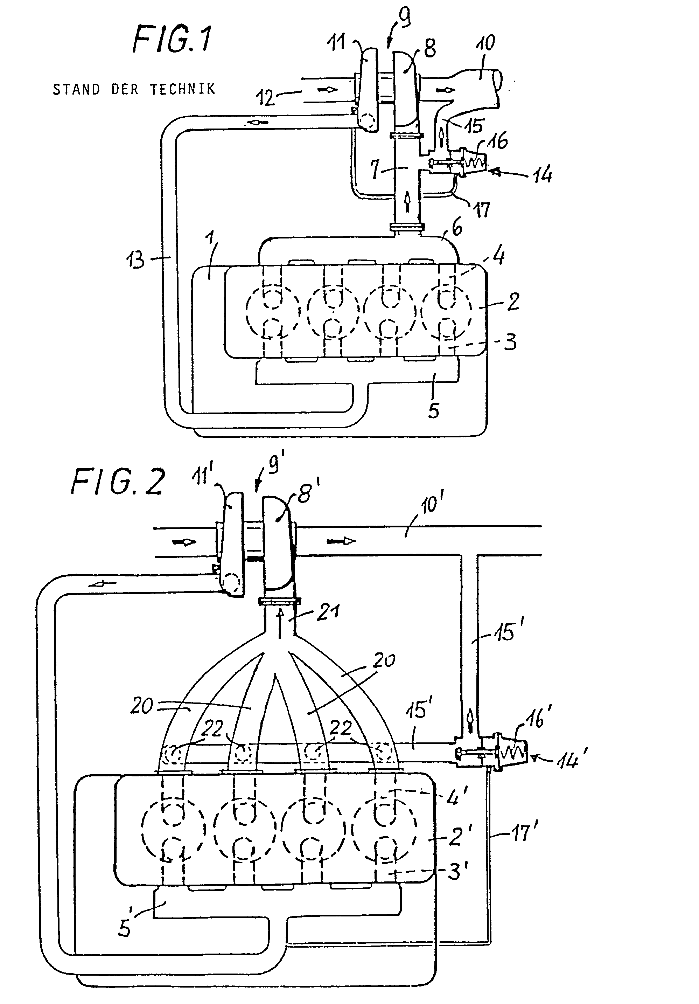

In Fig. 1 ist eine Brennkraftmaschine 1 dargestellt, die einen Zylinderkopf 2 aufweist, der Einlaßkanäle 3 und Auslaßkanäle 4 enthält, die mit einem Ansaugkrümmer 5 bzw. einem Auspuffkrümmer 6 in Verbindung stehen. An den Auspuffkrümmer 6 ist ein Abgassammelrohr 7 angeschlossen, das mit einer Abgasturbine 8 eines Abgasturboladers 9 in Verbindung steht. An die Ausgangsseite der Abgasturbine 8 ist eine Auspuffleitung 10 angeschlossen. Die Abgasturbine 8 treibt einen Lader 11, der Frischluft oder ein Kraftstoff-Luft-Gemisch durch eine Ansaugleitung 12 ansaugt und durch eine Leitung 13 zum Ansaugkrümmer 5 fördert. Zur Steuerung des Ladedrucks ist ein Abblaseventil 14 in einer die Abgasturbine 8 umgehenden Bypaßleitung 15 vorgesehen. Das Abblaseventil 14 kann sich gegen die Kraft einer Feder 16 mit Hilfe des Ladedrucks öffnen, der durch eine Leitung 17 von der Ladeluftleitung 13 zugeführt wird.

Um die Strömungsverluste im Abgassystem möglichst gering zu halten, muß der Querschnitt des Auspuffkrümmers 6 und des Abgassammelrohres 7 so groß bemessen werden, daß bei Vollast im oberen Drehzahlbereich der Auspuffgegendruck möglichst gering ist. Dies hat jedoch zur Folge, daß im unteren Drehzahlbereich, in dem eine verhältnismäßig geringe Abgasmenge anfällt, die Strömungsgeschwindigkeit der Abgase relativ gering ist, wodurch das Ansprechverhalten der Abgasturbine 8 gerade in dem Drehzahlbereich verschlechtert wird, wo ein schneller Aufbau des Ladedrucks erwünscht ist.

Fig. 2 zeigt eine erfindungsgemäße Brennkraftmaschine, wobei gleiche Teile wie in Fig. 1 mit den gleichen Bezugszeichen, jedoch mit einem Strich, bezeichnet sind. Bei dieser Ausführung sind an die einzelnen Auslaßkanäle 4' Abgasleitungen 20 angeschlossen, die sich erst verhältnismäßig kurz vor der Abgasturbine 8' in einem gemeinsamen Rohrstutzen 21 vereinigen. Jede Abgasleitung 20 ist nahe ihres Anschlusses an den zugehörigen Auslaßkanal 4' durch eine Zweigleitung 22 einzeln mit der Bypaßleitung 15' stromauf des Abblaseventils 14' verbunden. Bei dieser Ausführung besteht nun die Möglichkeit, die Abgasleitungen 20 so zu bemessen, daß bei Vollast im niedrigen Drehzahlbereich eine hohe Strömungsgeschwindigkeit der Abgase und damit ein schnelles Ansprechen der Abgasturbine 8' erreicht wird. Bei Vollast im oberen Drehzahlbereich, in welchem die Abgasleitungen 20 aufgrund ihres relativ geringen Querschnittes Druckverluste verursachen würden, ist jedoch das Abblaseventil 14' offen, so daß ein Teil der anfallenden Abgasmenge (der je nach Auslegung der Turbine bis zu 60% betragen kann) unter Umgehung der verlustbehafteten Abgasleitungen 20 durch die Bypaßleitung 15' abströmen kann, die mit einem entsprechend großen Querschnitt ausgeführt werden kann, um die Strömungsverluste gering zu halten.

Abweichend von dem in Fig. 2 dargestellten Ausführungsbeispiel wäre es grundsätzlich möglich, bereits die Auslaßkanäle 4' an die Bypaßleitung 15' anzuschließen, beispielsweise mittels eines in den Zylinderkopf 2' eingegossenen Verbindungskanals.

**Patentanspruch**

Mehrzylinder-Brennkraftmaschine, von der Zylindern Auslaßkanäle (4') ausgehen, die durch Abgasleitungen (20) mit einer Turbine (8') eines Abgasturboladers (9') verbunden sind, wobei eine die Turbine umgehende, von einem Abblaseventil (14') beherrschte Bypassleitung (15') für einen Teil der Abgase vorgesehen ist, und von jedem Auslaßkanal (4') oder von jeder Abgasleitung (20) nahe ihres Anschlusses an den Auslaßkanal (4') eine Zweigleitung (22) ausgeht, die mit der Bypassleitung (15') stromauf des Abblaseventils (14') verbunden ist, dadurch gekennzeichnet, daß die Abgasleitungen einzeln bis nahe an den Eingang der Turbine (8') geführt sind und ihr Querschnitt stromab der Verzweigung (22) kleiner ist als für den Durchsatz bei Vollast im hohen Drehzahlbereich erforderlich.

**Revendication**

Moteur à combustion interne polycylindre, dont les cylindres sont dotés de conduits d'échappement (4'), qui sont reliés par des conduites de gaz brûlés (20) à une turbine (8') d'un turbocompresseur (9'), un by-pass (15'), contournant la turbine et contrôlé par une soupape dedécharge (14'), étant prévu pour une partie du gaz, et un conduit de dérivation (22), relié au by-pass (15') en amont de la soupape de décharge (14'), partant de chaque conduit d'échappement (4') ou de chaque conduite de gaz (20), au voisinage du raccordement de cette dernière sur le conduit d'échappement (4'), caractérisé en ce que les conduites de gaz brûlés sont guidées individuellement, jusqu'au voisinage de l'entrée de la turbine (8'), leur section, en aval de la dérivation (22), étant inférieure à la section requise pour le débit à plein régime, aux fortes vitesses de rotation.

**Claim**

Multi-cylinder internal combustion engine having exhaust passages (4') which extend from their cylinders and which are connected by exhaust pipes (20) with a turbine of an exhaust-gas driven turbocharger (9') whereby a by-pass pipe (15') governed by a waste-gate (14') is provided for a portion of the exhaust gases, and whereby a branch pipe (22) extends from each exhaust passage or from each exhaust pipe (20) close to its connection with the exhaust passage (4') and is connected with the by-pass pipe (15') upstream of the waste gate (14'), characterized in that the exhaust pipes extend individually up to a point close to the inlet of the turbine (8') and that their cross-sectional area downstream of the branching (22) is smaller than necessary for the flow rate at full load in the high speed range.

FIG.1

STAND DER TECHNIK

FIG.2

1